# EUROPEAN PATENT APPLICATION

(11) **EP 3 437 762 A1**
(43) Date of publication of application: **06.02.2019**
(21) Application number: 17184416.0
(22) Date of filing: 02.08.2017
(51) Int. Cl.: B22F 3/105, B28B 1/00, B29C 64/153, B29C 64/35, B29C 64/364, B29C 64/371

(54) **METHOD AND SYSTEM FOR ADDITIVE MANUFACTURING A COMPONENT**

(71) Applicant: Siemens Aktiengesellschaft, 80333 München (DE)
(72) Inventor: RULE, David, 10115 Berlin (DE)

(57) **Abstract**

The present invention relates to a method for additive manufacturing a component comprising the steps of
a) providing a geometry for a component to be built layer (1) by layer (1),
b) providing a layer (1) of material,
c) scanning the layer (1) of material with at least one energy beam (6) to locally melt and/or sinter material such that a required scan-pattern corresponding to a cross-section of the provided part geometry is obtained, wherein a gas flow (12) that passes over the layer (1) of material in a predefined gas flow direction (16) is provided while the layer (1) is being scanned,
wherein the steps b) and c) are repeated as often as necessary to obtain a component with the defined geometry and wherein the gas flow direction (16) is changed at least once, preferably several times during the scanning of a layer (1) of material.

The present invention furthermore relates to a system for additive manufacturing a component.

## Description

The present invention relates to a method for additive manufacturing a component comprising the steps of
a) providing a geometry for a component to be built layer by layer,
b) providing a layer of material, in particular powder,
c) scanning the layer of material with at least one energy beam to locally melt and/or sinter material such that a required scan-pattern corresponding to a cross-section of the provided part geometry is obtained, wherein a gas flow that passes over the layer of material in a predefined gas flow direction is provided while the layer is being scanned, the predefined gas flow direction preferably being at least substantially linear,
wherein the steps b) and c) are repeated as often as necessary to obtain a component with the defined geometry.

Furthermore the present invention relates to a system for additive manufacturing a component comprising
- a working platform,
- layer means adapted to provide a layer of material, in particular powder on the working platform,
- gas flow means adapted to provide a gas flow passing over a layer of material being provided on the working platform in a predefined gas flow direction, the predefined gas flow direction preferably being at least substantially linear,
- an energy beam device adapted and configured to provide at least one energy beam and to scan the at least one energy beam over a layer of material being provided on the working platform,
- a control unit which is connected with the layer means, the gas flow means and the energy beam device.

Various types of additive manufacturing methods and systems are known from the state of the art. They all have in common that a component is built up in layers on the basis of a material, in particular powder. At least one energy beam, for example a laser beam is used for selectively melting and/or sintering the material to obtain a component of desired geometry. Such processes are also designated as 3D-printing processes. Examples for additive manufacturing methods are selective laser melting (SLM) or selective laser sintering (SLS).

In detail, each provided layer of material is scanned with the one or more energy beams such that material is melted in a scan-pattern that corresponds to a cross-section of the component to be built. If the material to be used is a powder, the energy beam(s) melt and/or sinter the powder to form a solidified layer of corresponding form.

After a portion of one layer has been scanned with the at least one energy beam to melt and/or sinter the material according to the desired pattern corresponding to a cross-section of the component to be manufactured, a working platform, on which the layers usually are provided and which usually is positioned in a build chamber, can be lowered and another layer of material, in particular powder will be provided on top of the already scanned one and will be scanned in the same manner.

These steps are repeated as often as necessary to obtain a component of desired geometry.

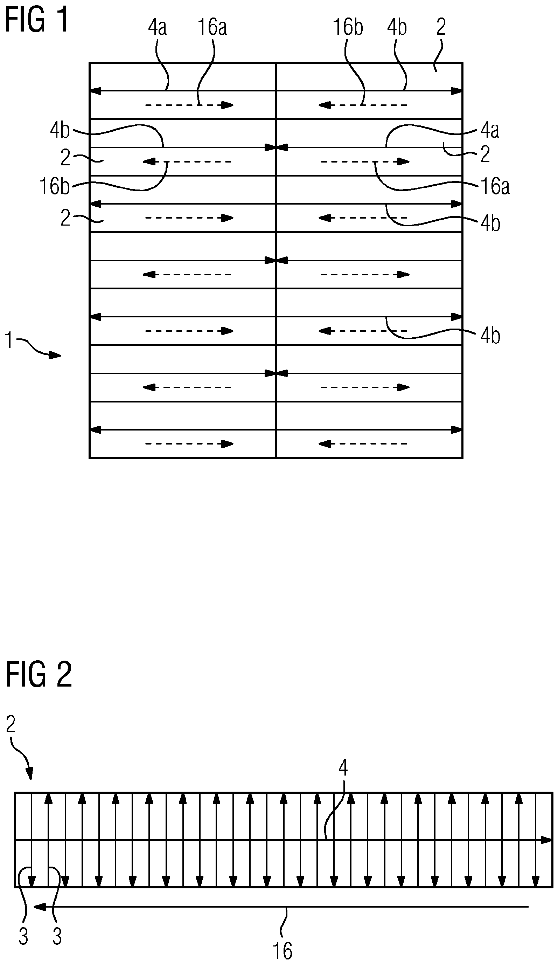

Different scan strategies are known for additive manufacturing like SLS and SLM. One possible strategy is the so called stripe scanning strategy. This involves - as purely schematically shown in figure 1 - melting or sintering the desired pattern in each layer 1 of material using a series of preferably rectangular, elongated stripe elements 2 which preferably are parallel to each other and are scanned consecutively. Each stripe element 2 can, as schematically shown in figure 2, itself be formed by number of parallel scan lines 3 along which an energy beam is moved across the width of each stripe element and which are consecutively formed. The scan lines 3 can each be formed in the same direction or - as shown in figure 2 - neighboring scan lines 3 can be oriented opposed to each other which reduces the travel path of the energy beam since the next scan line 3 can in this case be started at a closer position to where the foregoing scan line 3 has been finished. The direction in which the energy beam advances along each stripe element, i.e. the direction in which the respective stripe element is formed by successively parallel scan lines 3 is the stripe formation direction 4. In figures 1 and 2 the stripe formation direction 4 is indicated by an arrow in each stripe element 2. In the example shown in figure 2 the most left scan line 3 is formed first and then the scan lines 3 following to the right are consecutively generated. In particular, the stripe formation direction 4 is orthogonal or at least substantially orthogonal to the scan lines 3.

It has to be noted that if a cross section to be melted and/or sintered can not be formed by a number of rectangular stripe elements 2 as shown in figure 1, there will also be stripe elements which have the form of stripe segments. If for example a component with round cross sections has to be manufactured, the stripe elements can comprise a number of rectangular stripes located further in the middle and a number of segments of rectangular stripes in the edge region, where for example not all scan lines do have to extend over the complete width of the respective stripe element to achieve a round pattern.

It is know to the applicant that stresses can be minimized if adjacent stripes are scanned in opposite directions. This is also depicted in figure 1 where the stripe formation direction 4 of each of the number of parallel stripes 2 is indicated by an arrow. It is also known to the applicant that the stripe orientation is rotated every layer.

One problem within the framework of additive manufacturing processes is that plasma, debris and/or fume is produced during the scanning of the provided material layers with the one or more energy beam. The plasma, fume and/or debris can on one hand block the energy beam(s) being directed onto the material and on the other hand can be deposited on areas of the material layer that have jet to be scanned which has been found to produce additional surface roughness as well as the formation of layers of non-uniform thickness.

To remove for example debris from the build chambers in which the components are usually manufactured, it is known to provide a gas flow through the chamber.

The gas flow has a strong interaction with the advancing direction of the at least one energy beam, in case the stripe scanning strategy is applied with the direction in which the stripes are formed. Stripes that are scanned in the direction of the gas flow usually result in lower quality while stripes scanned in the opposite direction of the gas flow result in higher quality. This is in particular due to the interaction of plasma, debris and/or fume leaving the melt pool and the energy beam, in particular laser. There is a contradiction in that the stripe direction must be varied to have less stress in the build, but the directions that are best for least fume interaction with the laser all are at similar angles.

WO 2014/125280 A2 discloses to provide a linear gas flow with a predefined gas flow direction over a layer of powder that is scanned in stripes with a laser beam wherein the scanning is controlled such that the stripe formation direction is always partially opposed to the predefined gas flow direction to achieve good results. As can be seen in particular in figures 6 and 7 of this document, the stripe formation direction is the same for all parallel stripes in a material layer. The stripe formation direction is arranged to differ from the gas flow direction by a predefined angel of for example about 125 degrees.

To choose the stripe formation direction oblique relative to the linear gas flow enables to avoid the disadvantages of the stripe formation direction and the gas flow direction being the same. But as stated above, to minimize stresses created in a component during an additive manufacturing process, it can be desirable that the stripes explicitly do not all have the same stripe formation direction. This is in conflict with what is proposed in WO 2014/125280 A2.

Against this background is an object of the present invention to provide an improved method as well as system for additive manufacturing a component. In particular, it is an object of the present invention to provide a method and system of this kind which enables to obtain components with excellent properties and with vis-à-vis the state of the art reduced stresses.

In order to solve this object the present invention provides a method for additive manufacturing a component of the above mentioned kind, which is characterized in that the gas flow direction is changed at least once, preferably several times during the scanning of a layer of material.

Furthermore, the object is solved according to the present invention by providing a system for additive manufacturing a component of the above mentioned kind, which is characterized in that the gas flow means are adapted such that the gas flow direction can be changed.

The basic idea of the present invention in other words is not to choose the direction along which the laser is moved relative to a fixed gas flow direction to achieve good results, like the state of the art proposes, but to change the direction of the gas flow. Being flexible in terms of the gas flow direction makes it possible to follow changes in the direction the energy beam advances in when a layer is scanned, for example to follow a change in the stripe formation direction of adjacent stripes. As a result, the present invention makes it possible to have both the advantages of varying formation directions as well as of an optimal gas flow direction at all times. Due to this, components with reduced stress can be additively manufactured which have excellent properties, in particular properties that are not negatively influenced by debris or the like.

The gas flow direction in particular is changed in response to a change of the direction the at least one energy beam advances towards while a layer of material is scanned. The change of gas flow direction can of course be at the same time the change of the advance or formation direction of the energy beam(s) occurs or with a defined - maybe process-related - delay or defined time period before the change of the energy beam direction.

The change of the gas flow direction can in particular be effected by switching from one gas inlet through which gas is let into a working chamber surrounding a working platform the layers of material are provided on to another gas inlet through which gas is let into the working chamber. For example, there can be two gas inlets on opposing sides of a working platform the layers of material are provided on and the gas flow direction is changed by stopping to let gas in through the one gas inlet and starting to let gas in through the other gas inlet on the opposite side.

According to a preferred embodiment of the invention the gas flow direction is changed from a first gas flow direction to a second gas flow direction. It can be that the gas flow direction is changed several times, in particular alternated between a first and a second gas flow direction. The second gas flow direction is preferably opposed, in particular fully opposed to the first gas flow direction. In addition or alternatively the fist and/or the second gas flow direction are at least substantially linear.

Fully opposed means that the two directions are parallel or substantially parallel as well as opposed to each other, i.e. at least substantially anti-parallel.

If the advance direction of the at least one energy beam is changed more than once, the gas flow direction will preferably be changed more than once as well, in particular every time the advance direction of the at least one energy beam changes. If the advance direction of the energy beam, for example the stripe formation direction is alternated between two preferably opposed directions, the gas flow direction will preferably be alternated as well, in particular such that it is always at least substantially opposed, i.e. at least substantially anti-parallel to the current advance direction of the energy beam.

Furthermore, the first gas flow direction is in particular at least partially, preferably fully opposed to a fist preferably linear direction the at least one energy beam advances towards and/or the second gas flow direction is in particular at least partially, preferably fully opposed to a second preferably linear direction the at least one energy beam advances towards.

If a layer of material is for example scanned in a zigzag-line with the direction the energy beam advances towards changing from a first direction to a preferably fully opposed second direction whenever the edge of a cross-section to be scanned is reached, the first and second gas flow directions are preferably substantially or fully parallel to the two directions of the zig zag scanning configuration and chosen such that the gas flow is always fully opposed to the energy beam direction.

Usually, the scanning of the material layers will be performed with one energy beam, for a example one laser beam. Nevertheless, to obtain for example reduced manufacturing times, it is also possible to use more than one energy beam. In this case, different regions of a layer of material are preferably scanned simultaneously each with one of the energy beams, preferably in the same manner. The scanning will in particular be such that the energy beams are moved in a fully synchronized manner, in particular always move towards the same direction and by that always have the same orientation relative to the current gas flow direction that will preferably be changed whenever the direction of the energy beams is changed.

The gas can for example be argon.

The gas flow preferably is such that it passes at least substantially parallel over the provided layer of material, preferably whatever the current direction of the gas flow is. Particularly preferred the gas flow is provided in the form of an at least substantially planar layer of gas flow, the direction of the planar layer being changeably according to the present invention. A planar gas flow can for example be provided with number of adjacent nozzles on each side of a working platform, the nozzles on one side being used for letting gas in and the nozzles on the other side being used for extracting the gas. It is also possible to use a bar-formed or stripe-formed gas inlet and/or gas outlet.

Another embodiment of the inventive method is characterized in that in step c) the locally melting and/or sintering of material is performed in a plurality of stripe elements, each stripe element having the form of a preferably rectangular stripe or segment thereof, the stripe elements in particular being consecutively scanned, wherein each stripe element is formed by advancing at least one energy beam along the stripe element in a stripe formation direction, and wherein the stripe formation direction is changed at least once, preferably several times during the manufacturing of a component, and wherein preferably the gas flow direction is changed whenever the stripe formation direction is changed.

It can furthermore be that the stripe elements are linear and elongated and that the stripe formation direction of each stripe element is parallel to the central longitudinal axis of the respective stripe element.

Also, all stripe elements can be oriented at least substantially parallel. The stripe formation directions of adjacent, neighboring stripe elements preferably are opposed, in particular fully opposed.

Particularly preferred the gas flow direction is changed such that it is always opposed, preferably fully opposed to the current stripe formation direction.

According to yet a further embodiment of the inventive method the stripe formation direction is changed after each stripe element has been scanned. In addition or alternatively the gas flow direction is changed after each stripe element has been scanned.

The stripe elements can be scanned in arbitrary order. It is also possible that two or more stripe elements are scanned at the same time if two or more energy beams are provided.

According to these embodiments high quality components with reduced stresses can be manufactured applying the stripe scanning strategy.

The inventive system is particularly suited for performing the inventive method. The control unit of the inventive system accordingly is preferably adapted and configured to perform the inventive method.

According to one embodiment of the inventive system the gas flow means are adapted such that the gas flow direction can be changed from a first gas flow direction to a second gas flow direction, the second gas flow direction preferably being opposed, in particular fully opposed to the first gas flow direction, and the first and/or the second gas flow direction being preferably at least substantially linear.

The system furthermore can be characterized by that it comprises a preferably gas-tight working chamber in which the working platform is disposed, and in that at least one gas inlet through which gas can be let into the working chamber and at least one gas outlet through which gas can be let out of the chamber are provided. The at least one gas inlet and the at least one gas outlet are preferably disposed at opposite sides of the working platform.

According to a particularly preferred embodiment of the system two pairs each comprising one gas inlet through which gas can be let into the working chamber and one gas outlet through which gas can be let out of the working chamber are provided. Then the gas inlet and the gas outlet of each pair is preferably disposed at opposite sides of the working platform and the gas inlet of one pair and the gas outlet of the other pair in particular are disposed above each other.

This configuration allows to provide a linear gas flow over a layer of material in a first and a second, preferably opposed direction. If the stripe scanning strategy is applied, the gas flow direction can easily be switched to follow the stripe formation direction which for example is alternated between a first and second stripe formation direction which are at least substantially anti parallel.

It is also possible that only one inlet and one outlet are provided, preferably at opposite sides of the working platform, which are each adapted such the gas can be let into as well as out of the chamber through them. To change from a first gas flow direction to a second, opposed gas flow direction, the inlet will then be switched from an inlet modus to an outlet modus in which it functions as an outlet while the outlet is switched to function as an inlet.

Furthermore, the at least one gas inlet and the at least one gas outlet can each comprise a number of nozzles which preferably are arranged on a straight line, the straight lines the nozzles of the inlet and outlet being preferably oriented parallel to each other. A configuration like this allows to provide a linear, even gas flow over a layer of material having an extension in a direction orthogonal to the gas flow direction. In particular, a planar layer of gas flow can be created over a layer of material with a configuration like this.

The one or more gas inlet(s) as well as one or more gas outlet(s) are furthermore preferably adapted and arranged such that a gas flow can be provided which is oriented at least substantially parallel to the working platform and by that to material layer(s) provided thereon for all possible gas flow directions.

Further features and aspects of the present invention will become apparent to a skilled person from the following description of an exemplary embodiment of the additive manufacturing method and system according to the present invention with reference to the accompanying drawing. In the drawing
- Figure 1: is a purely schematic top view of a layer of material scanned in a stripe configuration;
- Figure 2: is a purely schematic top view of a single stripe with an umber of parallel scan lines;
- Figure 3: is a purely schematic perspective view of a system according to the present invention; and
- Figure 4: is a purely schematic side view of a laser beam scanning an layer of material.

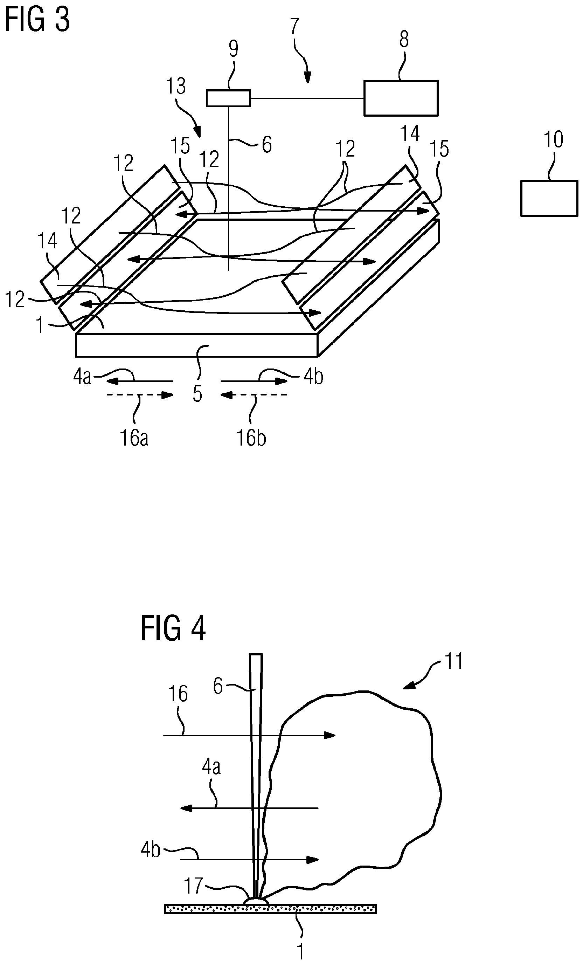

For additively manufacturing a component according to a predefined geometry, an inventive system as shown - in a purely schematic perspective side view - in figure 3 can be used.

The system comprises a working platform 5 on which a number of layers 1 of a metal powder are consecutively provided one above the other. For providing the layers 1 of powder, the system comprises powder means that are not shown in the figures. Such means are well known from the state of the art and usually comprise a powder reservoir positioned close to the working platform 5 as well as means to transport powder from the reservoir to the working platform 5 and to evenly distribute the powder over the working platform 5 to obtain a powder layer 1 of even, predefined thickness.

To be able to scan each layer 1, a laser beam 6 is provided by a laser beam device 7 of the system. The laser beam device 7 comprises a laser source 8 adapted to emit the laser beam 6 and a scanning unit 9 adapted and arranged to guide the laser beam 6 to a material layer 1 provided on the working platform 5 and to scan the layer 1 with the laser beam 6 in a predefined manner depending on a provided component geometry.

The laser beam device 7 is connected with a central control unit 10 of the inventive system. The same holds for the layer means. The control unit controls the providing of the layers 1 of material as well as the movement of the laser beam 6 depending on a predefined geometry of a component to be built that is fed into the control unit 10.

In the shown embodiment, each layer 1 provided on the working platform 6 is in detail scanned in a stripe configuration as shown in figures 1 and 2 which have already been described above, wherein the stripe formation direction 4 of adjacent stripe elements 2 is opposed. The control unit 10 of the system is configured accordingly.

Furthermore, to avoid the negative influence of plasma and fume 11 created during the scanning of material with the laser beam 6, a gas, in particular argon flow 12 is provided in the interior 13 of the gas-tight working chamber of the system shown in figure 3, which is defined by a housing of the system that is not shown in the figures.

For providing the argon flow 12, the system comprises a pair comprising a gas inlet bar 14 adapted to let argon into the interior 13 of the working chamber and a gas outlet bar 15 adapted to let argon out of the working chamber. Each bar 14, 15 comprises a number of nozzles that are arranged side by side on a straight line and that are not shown in the strongly simplified figure 3. The bars 14, 15 are connected with an argon source or reservoir as well as a pump for pumping argon from the outlet bar 15 and to the inlet bar 14 which as well are not shown in the figures. The gas inlet bar 14 and the gas outlet bar 15 are disposed on opposite sides of the rectangular working platform 5 of the system, the gas inlet bar 14 in figure 3 being on the left side of the working platform 5 and the gas outlet bar 15 on the right side of the working platform 5. When gas is let in through the gas inlet bar 14 and let out through the gas outlet bar 15, a planar layer of gas flow 12 is obtained which is oriented at least substantially parallel to the working platform 5 and by that to a layer 1 of material provided thereon. The defined gas flow direction 16 of the provided gas flow is linear.

The gas flow 12 has a strong interaction with the direction in which the stripes elements 2 are formed. Stripe elements 2 that are scanned in the direction 16 of the gas flow 12 usually result in lower quality while stripe elements 2 scanned in the opposite direction of the gas flow 12 result in higher quality. This is schematically depicted in figure 4, in which the current gas flow direction 16 is represented by the upper most arrow and two different stripe formation directions 4a, 4b, one being parallel and one being anti-parallel to the gas flow direction 16, are represented by the two arrows below. The stripe formation direction 4a pointing to the left in figure 4 that is fully opposed, i.e. anti-parallel to the gas flow direction 16 is better since in this case an interaction between plasma and fume leaving the melt pool 17 and the laser beam 6 is reduced or even completely prevented.

To have optimal conditions during the scanning of all stripe elements 2 and to obtain components of highest quality, according to the present invention not only the stripe formation direction 4 is changed to reduce stresses but also the gas flow direction 16 is changed to avoid an interaction of plasma and fume leaving the melt pool 17 and the laser beam 6.

In detail, the gas flow direction 16 is changed such that it is always fully opposed, i.e. anti-parallel to the current stripe formation direction 4.

To enable an adaptable gas flow direction 16, the system shown in figure 3 comprises a further pair of a gas inlet bar 14 and gas outlet bar 15, which are identical in construction to the other pair of gas inlet 14 and outlet bar 15 and are also disposed on opposite sides of the working platform 5. In detail, the gas outlet bar 15 of the further pair is disposed below the gas inlet bar 14 of the first pair and the gas inlet bar 14 of the further pair is disposed above the gas outlet bar 15 of the first pair.

This configuration makes it possible to have an argon flow 12 within the working chamber in a first linear gas flow direction 16a as well as an argon flow 12 within the working chamber in a second linear gas flow direction 16b, wherein the second gas flow direction 16b is fully opposed, i.e. anti-parallel to the first one 16a. The two possible fully opposed gas flow directions 16a, 16b are depicted by corresponding arrows in figure 3.

Both pairs of gas inlet and outlet bars 14, 15 are also connected with the central control unit 10 and the control unit 10 is adapted and configured to change the gas flow direction 16 whenever the stripe formation direction 4 is changed.

To additively manufacture a component with the system shown in figure 3, a predefined component geometry is fed into the central control unit 10. Layers 1 of powder are consecutively provided on the working platform 5 and scanned using the laser beam device 7 which is controlled by the control unit 10.

In detail, each layer 1 is scanned such that a scan pattern to be obtained is achieved by consecutively scanning a number of parallel stripe elements 2 in particular each having an elongated, rectangular form as shown in figures 1 and 2. Each stripe element 2 is obtained by moving the laser beam 6 along a number of parallel scan lines 3 across the stripe element 2, wherein the stripe formation direction 4 is defined by the order the scan lines 3 are consecutively scanned in. It has to be noted that - depending on the form of the cross-section to be scanned - not each stripe element 2 has to be of rectangular form, as shown in figure 1. In particular, the scan-lines 3 of a stripe element 2 do not have to be of the same length, or at least not all of them have to be of the same length. If for example a cross-section with round contour has to be obtained, the stripe elements 2 being near the edge will not be of rectangular form but will have the form of a segment of a rectangular stripe with scan-lines 3 of different length.

To minimize stresses in the component to be manufactured, the stripe formation direction 4 is changed each time a stripe element 2 is finished. The direction is changed from a first stripe formation direction 4a pointing to the left in figure 1, to a second stripe formation direction 4b, pointing to the right in figure 1. The first and second stripe formation directions 4a, 4b are - as can be seen in figure 1 - fully opposed, i.e. anti-parallel. For the next stripe element 2, the first stripe formation direction 4a is chosen again and so on. In other words, when the stripe elements 2 are consecutively scanned, the stripe formation direction 4 is alternated between the first and the second direction 4a, 4b. The alternating stripe formation direction 4 is indicated in figure 3 by two corresponding arrows.

According to the invention, the gas flow direction 16 is alternated as well, in detail such that it is always fully opposed, i.e. anti-parallel to the current stripe formation direction 4 along which the laser beam 6 advances along each of the elongated, rectangular stripe elements 2 in their longitudinal direction. The gas flow direction 16 is controlled by the control unit 10. Whenever the stripe formation direction 4 is changed from the first stripe formation direction 4a pointing to the left in figure 1 to the second stripe formation direction 4b pointing to the right in figure 1, the gas flow direction 16 is changed from the first gas flow direction 16a being fully opposed to the first stripe formation direction 4a to the second gas flow direction 16b being fully opposed to the second stripe formation direction 4b. This is done by changing from a modus in which argon is let into the working chamber through the inlet bar 14 of the first pair that is disposed on the left side of the working platform 5 and let out through the gas outlet bar 15 of the first pair disposed on the right side of the working platform 5 to a modus in which argon is let in through the other gas inlet bar 14 on the right side of the working platform 5 and let out through the other gas outlet bar 15 on the left side of the working platform 5.

Since the direction 16 of the argon flow 12 is always fully opposed to the alternating stripe formation direction 4, components with reduced stress can be additively manufactured which have excellent properties, in particular properties that are not negatively influenced by debris or the like. Also, due to the alternating stripe formation direction 4 the travel path of the laser beam 6 and by that the manufacturing time is optimized.

While various embodiments of the present invention have been shown and described herein, it will be obvious that such embodiments are provided by way of example only. Numerous variations, changes and substitutions may be made without departing from the invention herein.

## Claims

1. Method for additive manufacturing a component comprising the steps of
a) providing a geometry for a component to be built layer (1) by layer (1),
b) providing a layer (1) of material, in particular powder,
c) scanning the layer (1) of material with at least one energy beam (6) to locally melt and/or sinter material such that a required scan-pattern corresponding to a cross-section of the provided part geometry is obtained, wherein a gas flow (12) that passes over the layer (1) of material in a predefined gas flow direction (16) is provided while the layer (1) is being scanned, the predefined gas flow direction (16) preferably being at least substantially linear,
wherein the steps b) and c) are repeated as often as necessary to obtain a component with the defined geometry,
**characterized in that**
the gas flow direction (16) is changed at least once, preferably several times during the scanning of a layer (1) of material.

2. Method according to claim 1, **characterized in that** the gas flow direction (16) is changed in response to a change of the direction (4) the at least one energy beam (6) advances towards.

3. Method according to claim 1 or 2,
**characterized in that**
the gas flow direction (16) is changed from a first gas flow direction (16a) to a second gas flow direction (16b), the second gas flow direction (16b) preferably being opposed, in particular fully opposed to the first gas flow direction (16a), and the first gas flow direction (16a) in particular being at least partially, preferably fully opposed to a first direction (4a) the at least one energy beam (6) advances towards and/or the second gas flow direction (16b) in particular being at least partially, preferably fully opposed to a second direction (4b) the at least one energy beam (6) advances towards.

4. Method according to one of the foregoing claims,
**characterized in that**
the gas flow direction (16) is changed several times, wherein in particular the gas flow direction (16) is alternated between a first (16a) preferably linear and a second (16b) preferably linear gas flow direction, the second (16b) gas flow direction preferably being opposed, in particular fully opposed to the first (16a) gas flow direction.

5. Method according to one of the foregoing claims,
**characterized in that**
in step c) the locally melting and/or sintering of material is performed in a plurality of stripe elements (2), each stripe element (2) having the form of a preferably rectangular stripe or segment thereof, the stripe elements (2) in particular being consecutively scanned, wherein each stripe element (2) is formed by advancing at least one energy beam (6) along the stripe element (2) in a stripe formation direction (4), and wherein the stripe formation direction (4) is changed at least once, preferably several times during the manufacturing of a component, and wherein preferably the gas flow direction (16) is changed whenever the stripe formation direction (4) is changed.

6. Method according to claim 5,
**characterized in that**
the stripe elements (2) are linear and elongated and the stripe formation direction (4) of each stripe element (2) preferably is parallel to the central longitudinal axis of the respective stripe element (2).

7. Method according to claim 5 or 6,
**characterized in that**
all stripe elements (2) are oriented at least substantially parallel, wherein the stripe formation directions (4) of neighboring stripe elements (2) preferably are opposed, in particular fully opposed.

8. Method according to one of claims 5 to 7,
**characterized in that**
the stripe formation direction (4) is changed after each stripe element (2) has been scanned and/or the gas flow direction (16) is changed after each stripe element (2) has been scanned.

9. Method according to one of claims 5 to 8,
**characterized in that**
the gas flow direction (16) is changed such that it is always opposed, preferably fully opposed to the current stripe formation direction (4).

10. System for additive manufacturing a component comprising
- a working platform (5),
- layer means adapted to provide a layer (1) of material, in particular powder on the working platform (5),
- gas flow means adapted to provide a gas flow (12) passing over a layer (1) of material being provided on the working platform (5) in a predefined gas flow direction (16), the predefined gas flow direction (16) preferably being at least substantially linear,
- an energy beam device (7) adapted and configured to provide at least one energy beam (6) and to scan the at least one energy beam (6) over a layer (1) of material being provided on the working platform (5),
- a control unit (10) which is connected with the layer means, the gas flow means and the energy beam device (7),
**characterized in that**
the gas flow means are adapted such that the gas flow direction (16) of the provided gas flow (12) can be changed.

11. System according to claim 10,
**characterized in that**
the gas flow means are adapted such that the gas flow direction (16) can be changed from a first gas flow direction (16a) to a second gas flow direction (16b), the second gas flow direction (16b) preferably being opposed, in particular fully opposed to the first gas flow direction (16a), and the first and/or the second gas flow direction being preferably at least substantially linear.

12. System according to claim 10 or 11,
**characterized in that**
the system comprises a preferably gas-tight working chamber in which the working platform (5) is disposed, and **in that** at least one gas inlet (14) through which gas can be let into the working chamber and at least one gas outlet (15) through which gas can be let out of the chamber are provided, wherein at least one gas inlet (14) and at least one gas outlet (15) preferably are disposed at opposite sides of the working platform (5).

13. System according to claim 12,
**characterized in that**
two pairs each comprising one gas inlet (14) through which gas can be let into the working chamber and one gas outlet (15) through which gas can be let out of the working chamber are provided, the gas inlet (14) and the gas outlet (15) of each pair preferably being disposed at opposite sides of the working platform (5), and the gas inlet (14) of one pair and the gas outlet (15) of the other pair in particular being disposed above each other.

14. System according to one of claims 10 to 13,
**characterized in that**
the control unit (10) is adapted and configured to perform the method according to one of claims 1 to 9.
